# FASCICULE DE BREVET EUROPEEN

(11) **EP 4 574 563 B1**
(45) Date de publication et mention de la délivrance du brevet: **25.11.2026**
(21) Numéro de dépôt: 24219663.2
(22) Date de dépôt: 13.12.2024
(51) Int. Cl.: B60N 2/58, B60N 2/70

(54) **SIÈGE DE VÉHICULE**
FAHRZEUGSITZ
VEHICLE SEAT

(30) Priorité: 22.12.2023 FR 2315211
(43) Date de publication de la demande: 25.06.2025
(73) Titulaire: Renault s.a.s, 92100 Boulogne Billancourt (FR)
(72) Inventeur: BRIN, Eric, 78280 GUYANCOURT (FR); VIALLE, Valérie, 78280 GUYANCOURT (FR)

(56) Documents cités:
- EP-A1- 1 714 584
- EP-A1- 3 636 487
- WO-A1-2022/076567
- US-A1- 2023 219 474

## Description

### Domaine technique

La présente invention concerne un siège, notamment pour le domaine des transports. En particulier, l'invention concerne un siège de véhicule et un procédé de fabrication d'un tel siège.

### Technique antérieure

Pour fabriquer des sièges de voiture, il est connu de disposer une coiffe sur une matelassure qui repose sur une armature. La coiffe permet en général de masquer à la vue de l'utilisateur la matelassure. La demande de brevet EP 1 714 584 A1 divulgue par exemple un siège et un procédé de fabrication d'un tel siège de l'art antérieur.

Il est connu de maintenir la coiffe sur la matelassure à l'aide de différents organes de fixation, par exemple des pinces, montés sur la matelassure à différents endroits pour avoir une bonne mise en tension de la coiffe.

Par exemple, de telles pinces peuvent être positionnées dans le moule qui permet la fabrication de la matelassure avant l'injection.

Cette méthode est avantageuse lorsque l'aspect de la matelassure n'est pas esthétique et/ou peu qualitatif. Cependant, lorsque la matelassure est elle-même un produit qualitatif et/ou esthétique, elle ne permet pas de mettre en valeur la matelassure.

### Exposé de l'invention

Il existe un besoin de disposer d'un siège permettant de mettre en valeur la matelassure, sans trop complexifier la fabrication du siège.

### Résumé de l'invention

La présente invention répond à ce besoin grâce à, selon l'un de ses aspects, un siège de véhicule comportant :
- une armature ;
- une matelassure comportant une première surface en contact avec l'armature ;
- une pluralité de premiers organes de fixation solidarisés à la matelassure, ladite pluralité de premiers organes de fixation affleurant à une deuxième surface de la matelassure
- une coiffe destinée au recouvrement de la matelassure, la coiffe comportant à sa périphérie au moins un deuxième organe de fixation configuré pour coopérer avec au moins l'un parmi les premiers organes de fixation pour maintenir la périphérie de la coiffe sur la matelassure ;
dans lequel chaque premier organe de fixation est positionné de sorte que la coiffe recouvre uniquement une première portion de la deuxième surface de la matelassure lorsque lesdits premiers et deuxièmes organes de fixation coopèrent les uns avec l'autre, une deuxième portion de la deuxième surface de la matelassure non recouverte par la coiffe étant visible pour un utilisateur.

Par « *visible pour un utilisateur »,* on entend qu'une personne qui utilise le siège de manière nominale, c'est-à-dire dans l'optique de s'assoir dessus sans chercher à démonter des éléments ou regarder selon un point de vue spécifique, par exemple par-dessous le siège, la deuxième portion est visible. En d'autres termes, lorsque l'utilisateur regarde le siège de face, de côté ou de haut, voire de derrière, la deuxième portion est visible de manière évidente. Ainsi, à l'inverse, une partie est non visible lorsque invisible pendant une utilisation nominale du siège. La deuxième portion est ainsi libre ou non recouverte de toute portion de la coiffe. En particulier, la deuxième portion est ainsi libre ou non recouverte de toute portion de la coiffe dans une direction perpendiculaire à la deuxième surface en tout point de la deuxième portion.

Grâce à l'invention, une partie de la matelassure, au niveau de la deuxième portion est visible par l'utilisateur. Ainsi, l'utilisateur du siège peut facilement voir la matelassure, ce qui permet de la mettre en valeur, surtout lorsqu'elle est esthétique et/ou qualitative.

### Organe de fixation

Chaque premier organe de fixation peut être positionné à distance de la périphérie de la deuxième surface.

Par « *à distance de la périphérie de la deuxième surface »,* on entend que le premier organe de fixation est à une distance non nulle de la périphérie, notamment à au moins 1 mm de la périphérie, par exemple à une distance égale à au moins 15%, notamment au moins 20%, de la distance entre deux bords périphériques opposés de la deuxième surface.

Chaque premier organe de fixation peut venir de matière avec la matelassure. En d'autres termes, le premier organe de fixation est intégralement formé, ou encore est monobloc, avec la matelassure. Cela permet un meilleur maintien mécanique entre le premier organe de fixation et la matelassure.

La matelassure et la pluralité de premiers organes de fixation peuvent être fabriqués par un procédé de fabrication additive, notamment unique. Cela permet un excellent contrôle de l'aspect visuel des premiers organes de fixation et de la matelassure tout en garantissant une bonne intégration des premiers organes de fixation sur la matelassure. En particulier, l'aspect visuel de la matelassure peut être contrôlé pour obtenir un rendu esthétique et qualitatif.

Lorsque la matelassure comporte une structure alvéolaire, la rigidité des premiers organes de fixation peut être supérieure à celle de la matelassure au niveau de la structure alvéolaire. En particulier, la densité de matière au niveau de chaque premier organe de fixation peut être supérieure à celle de la matelassure au niveau de la structure alvéolaire. Cela permet d'assurer le bon fonctionnement des premiers organes de fixation et donc une bonne fixation de la coiffe et une bonne mise en tension de la coiffe pour obtenir un bon aspect visuel.

Les premiers organes de fixation peuvent être réalisés dans un matériau identique à celui de de la matelassure.

Le siège comporte une pluralité de premiers organes de fixation, la coiffe comportant au moins un deuxième organe de fixation. Le siège peut par ailleurs comporter une pluralité de premiers organes de fixation et une pluralité de deuxièmes organes de fixation. De manière préférée, le siège comprend un nombre identique de premiers et de deuxièmes organes de fixation. Le siège peut notamment comprendre au moins trois premiers organes de fixation et/ou au moins trois deuxième organes de fixation.

La deuxième surface de la matelassure peut comporter un bord s'étendant selon une trajectoire.

Le bord peut comporter une courbure s'étendant le long de la trajectoire entre un premier point et un deuxième point.

Un premier organe de fixation peut être positionné le long de la trajectoire avant ou au niveau du premier point, un autre premier organe de fixation étant positionné le long de la trajectoire après ou au niveau du deuxième point. Avoir des premiers organes de fixation à ces positions permet une bonne mise en tension de la coiffe au niveau de la courbure et un bon recouvrement, ce qui améliore l'esthétique visuelle.

La deuxième surface est avantageusement dépourvue de premier organe de fixation au niveau de la courbure entre le premier point et le deuxième point.

Lorsque la matelassure comporte une gorge s'étendant sur la deuxième surface, la gorge présentant un fond de gorge, chaque premier organe peut s'étendre depuis le fond de gorge ou au-delà du fond de gorge. Ainsi, la visibilité des premiers organes de fixation est fortement est réduite, voire également la visibilité dudit au moins un deuxième organe de fixation lorsqu'engagés dans les premiers organes de fixation, ce qui améliore l'esthétique visuelle.

Les premiers organes de fixation peuvent être choisis dans le groupe constitué par une pince, une fermeture autoagrippant (velcro^{®}), un crochet, ou une combinaison de ceux-ci. En particulier, les premiers organes de fixation peuvent être une pince.

Ledit deuxième organe de fixation peut être choisi dans le groupe constitué par un jonc, une fermeture autoagrippant (velcro^{®}), une boucle, ou une combinaison de ceux-ci. En particulier, ledit au moins un second organe de fixation peut être un jonc.

### Matelassure

La matelassure peut être une assise ou une portion d'assise, un dossier ou une portion de dossier, un accoudoir ou une portion d'accoudoir, ou une combinaison de ceux-ci.

La matelassure peut comporter une structure alvéolaire. On entend ainsi que la matelassure comporte un réseau de cellules qui donne une certaine souplesse à la matelassure.

La matelassure peut être formée d'un matériau polymère, par exemple un matériau polymère expansé.

La deuxième surface de la matelassure peut être adjacente à la première surface. Par exemple, la deuxième surface peut former un angle avec la première surface comprise entre 50° et 150°, notamment autour de 90°. Dans ce cas, la matelassure peut comporter une troisième surface, adjacente à la deuxième surface et opposée à la première surface.

En variante, la deuxième surface peut être disjointe de la première surface. En particulier, la deuxième surface et la première surface peuvent être des surfaces opposées. Dans ce cas, la matelassure peut comporter une troisième surface reliant la première et la deuxième surface.

La deuxième portion peut s'étendre sur 10% à 80% de la deuxième surface.

La matelassure peut comporter une gorge s'étendant sur la deuxième surface, la gorge présentant un fond de gorge.

La matelassure peut comporter une structure de renfort entre la gorge et la première portion de la deuxième surface. Lorsque les premiers organes s'étendent depuis le fond de gorge ou au-delà du fond de gorge, la structure de renfort assure une bonne mise en tension et un bon maintien de la coiffe. En outre, cela permet de limiter la déformation de la portion recouverte de la matelassure, notamment en limitant l'écartement de la gorge. Ainsi, la structure de renfort permet de compenser au moins en partie l'effort exercé par la coiffe sur la matelassure dû à la tension présente dans la coiffe.

La matelassure peut comporter une structure de contre-appui entre la gorge et la deuxième portion non recouverte de la deuxième surface, la structure pouvant prendre une première position et une deuxième position, la structure étant configurée pour générer une force de rappel élastique vers la première position. Lorsque les premiers organes s'étendent depuis le fond de gorge ou au-delà du fond de gorge, cela facilite l'installation de la coiffe et assure un bon maintien et une bonne tension. La structure de contre-appui fonctionne de pair avec la structure de renfort pour limiter la déformation de la portion recouverte de la matelassure. La structure de contre-appui permet ainsi d'exercer un effort de rappel sur la gorge pour la maintenir en position.

### Coiffe

Une partie de la périphérie de la coiffe peut être insérée dans la gorge de la matelassure. Cela permet de masquer la périphérie de la coiffe, qui peut ne peut être très esthétique.

La coiffe peut comporter un textile.

La coiffe peut comporter au moins un deuxième organe fixation pour chaque premier organe de fixation.

La coiffe peut comporter un troisième organe de fixation éloigné de la périphérie de la coiffe. Dans ce cas, un quatrième organe de fixation peut être solidarisé à la matelassure pour coopérer avec le troisième organe de fixation.

### Procédé de fabrication d'un siège

L'invention a également pour objet, indépendamment ou en combinaison avec ce qui précède, un procédé de fabrication d'un siège tel que décrit précédemment, le procédé comportant les étapes suivantes :
- fournir l'armature ;
- fournir la coiffe ;
- fournir la matelassure, la pluralité de premiers organes de fixation étant solidarisés à la matelassure après sa fabrication, chaque premier organe de fixation étant positionné au niveau d'une deuxième surface de la matelassure ;
- positionner la matelassure sur l'armature de manière à mettre la première surface de la matelassure en contact avec l'armature ;
- recouvrir la deuxième surface avec la coiffe en faisant coopérer chaque premier organe de fixation avec ledit au moins un deuxième organe de fixation à la périphérie de la coiffe ;
dans lequel, après l'étape de recouvrement, la coiffe recouvre uniquement une première portion de la deuxième surface de la matelassure, une deuxième portion de la deuxième surface de la matelassure non recouverte par la coiffe étant visible pour un utilisateur.

### Brève description des dessins

L'invention pourra être mieux comprise à la lecture de la description détaillée qui va suivre, d'exemples de mise en œuvre non limitatifs de celle-ci, et à l'examen du dessin annexé, sur lequel
[Fig 1] illustre, en perspective, de manière schématique, un exemple de siège selon l'invention,
[Fig 2] est une vue en coupe selon II de la figure 1,
[Fig 3] est une vue en coupe transversale de la figure 2 selon III,
[Fig 4] illustre, en perspective, de manière isolée et schématique, une pince de la matelassure du siège de la figure 1,
[Fig 5] illustre, en perspective, partiellement et de manière schématique, la coiffe du siège de la figure 1,
[Fig 6] illustre en perspective, partiellement et de manière schématique, un autre exemple de matelassure d'un exemple de siège selon l'invention,
[Fig 7] illustre en perspective, partiellement et de manière schématique, un autre exemple de matelassure d'un exemple de siège selon l'invention,
[Fig 8] est une coupe transversale de la figure 7 selon VIII,
[Fig 9] est une coupe transversale de la figure 7 selon IX,
[Fig 10] est une vue similaire à la figure 3 illustrant une étape d'un procédé selon l'invention, et
[Fig 11] est une vue similaire à la figure 10 illustrant une autre étape d'un procédé selon l'invention.

### Description détaillée

Dans la suite de la description, les éléments identiques ou de fonctions identiques portent le même signe de référence. A des fins de concision de la présente description, ils ne sont pas décrits en regard de chacune des figures, seules les différences entre les modes de réalisation étant décrites.

Sur les figures, les proportions réelles n'ont pas toujours été respectées, dans un souci de clarté.

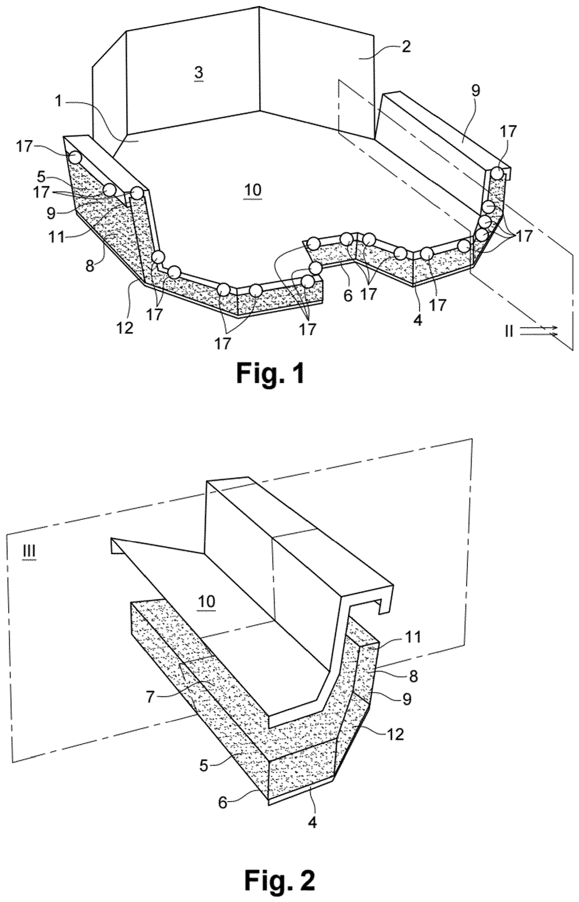

On a illustré aux figures 1 à 5 un premier exemple de siège 1 selon l'invention.

Le siège 1 comporte une armature 2 qui permet la reprise des efforts mécaniques et qui rigidifie le siège 1.

Cette armature 2 est par exemple réalisée en matériau polymère. Cependant, l'invention n'est pas limitée à ce matériau, l'armature 2 pouvant être métallique, en bois, ou en tout autre matériau suffisamment rigide.

L'armature 2 comporte par exemple un dossier 3, partiellement représenté dans un souci de clarté, et une assise 4.

Le siège 1 comporte également une matelassure 5 alvéolaire et en contact, au niveau d'une surface inférieure 6, avec l'armature 2 au niveau de l'assise 4.

Comme illustré, la matelassure 5 comporte une forme générale en U, les côtés 9 du U étant configurées pour soutenir les jambes de l'utilisateur lorsqu'il est dans le siège 1.

La matelassure 5 comporte également une surface supérieure 7, opposée à la surface inférieure 6, et une surface périphérique 8 reliant la surface inférieure 6 et la surface supérieure 7.

La surface supérieure 7 peut être, sur une partie, sensiblement parallèle à la surface inférieure 6.

La surface périphérique 8 peut s'étendre sensiblement perpendiculairement par rapport à la surface inférieure 6 et la surface supérieure 7.

Le siège 1 comporte également une coiffe 10 textile qui recouvre entièrement la surface supérieure 7 et partiellement la surface périphérique 8.

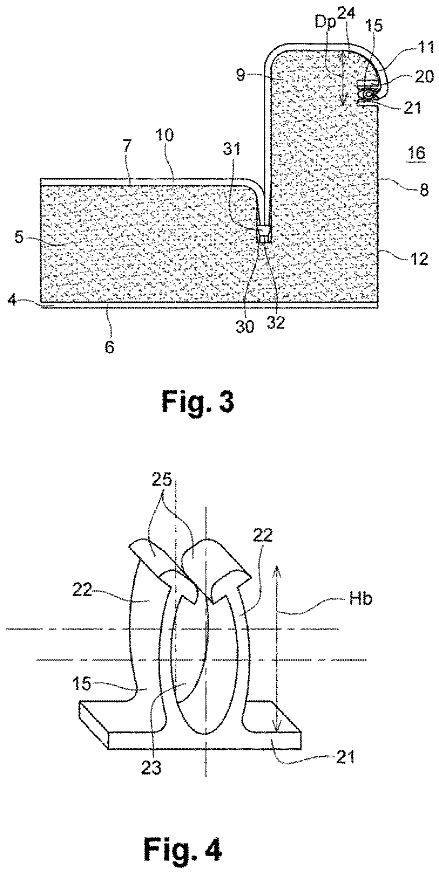

En particulier, comme particulièrement visible sur la figure 3, une première portion 11 de la paroi périphérique 8 est recouverte par la coiffe 10 et une deuxième portion 12 est non recouverte par la coiffe 10.

La matelassure 5 comporte des premiers organes de fixation, dans cet exemple des pinces 15, qui coopèrent avec des deuxièmes organes de fixation, dans cet exemple des joncs 16, de la coiffe 10. Les pinces 15 et les joncs 16 sont illustrés sur les figures 3 à 6.

Sur la figure 1, on a illustré les différents points 17 de coopération entre les pinces 15 et les joncs 16. Par exemple, pour chaque segment de la surface périphérique 8, il y a deux points 17 de coopération.

Comme visible sur la figure 3, chaque pince 15 s'étend depuis le fond 21 d'une gorge 20 s'étendant le long de la surface périphérique 8.

Comme visible sur la figure 4, chaque pince 15 comporte deux bras 22 parallèles formant entre eux un creux 23 destiné à recevoir un jonc 16. Les bras 22 comportent à une extrémité libre des élargissements 25 qui contraignent l'extraction d'un jonc 16 inséré dans le creux 23.

Par exemple, les bras 22 ont une hauteur Hb de 10 mm, qui est égale ou légèrement inférieure à la profondeur de la gorge 20. Cela permet aux pince 15 de ne pas dépasser de la matelassure 5.

Les pinces 15 sont à une distance Dp non nulle de la périphérie 24 de la surface périphérique 8.

Dans cet exemple, les pinces 15 et la matelassure sont produites en une unique opération de fabrication additive, ce qui permet aux pinces 15 de venir de matière dans la matelassure 5.

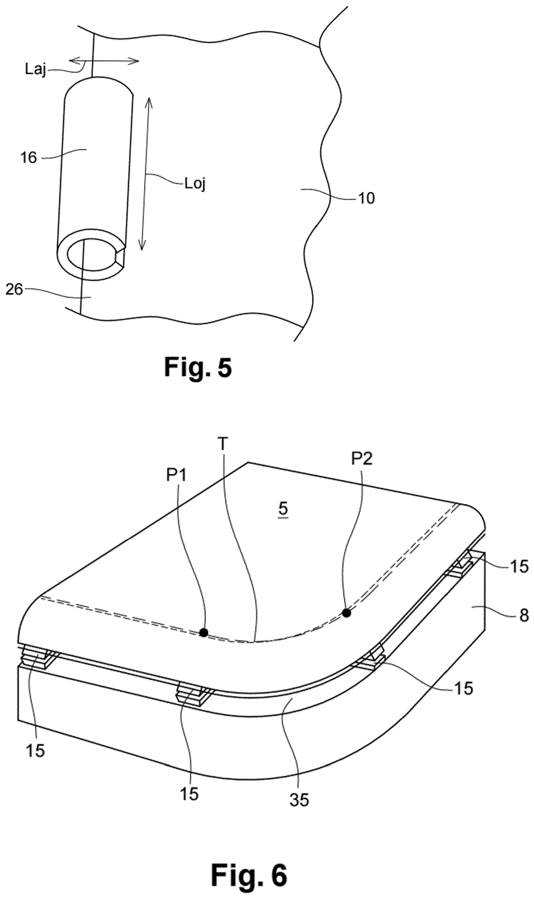

Chaque jonc 16 est disposé à la périphérie 26 de la coiffe 10, comme particulièrement illustré sur la figure 5.

Chaque jonc 16 a par exemple une section transversale en C, la périphérie 26 étant insérée et pincée à l'intérieur du C.

Le jonc 16 peut s'étendre de manière allongée le long de la périphérie 26 sur une longueur Loj égale à 16 mm.

La largeur Laj du jonc 16, mesurée perpendiculairement à la périphérie 26, peut être égale à 6 mm.

Dans cet exemple, la surface supérieure 7 de la matelassure 5 comporte également en bas des côtés 9, une seconde gorge 30 dans laquelle la coiffe 10 est insérée et bloquée à l'aide d'une réglette 31 dans laquelle une boucle 32 de la coiffe 10 est en prise.

Cette gorge 30, avec la réglette 31, permet d'assurer un suivi de la forme en U de la matelassure 5 par la coiffe 10, notamment au niveau des côtés 9, contribuant à une bonne esthétique.

Dans une variante illustrée sur la figure 6, la matelassure 5 comporte une surface périphérique 8 qui s'étend selon une trajectoire T et qui comporte une courbure 35.

La courbure 35 s'étend, le long de la trajectoire T entre un premier point P1 et un deuxième point P2.

Comme illustré, une pince 15 est disposée au niveau du premier point P1 et une autre au niveau du point P2. De plus, la surface périphérique 8 est avantageusement dépourvue de pince 15 au niveau de la courbure 35.

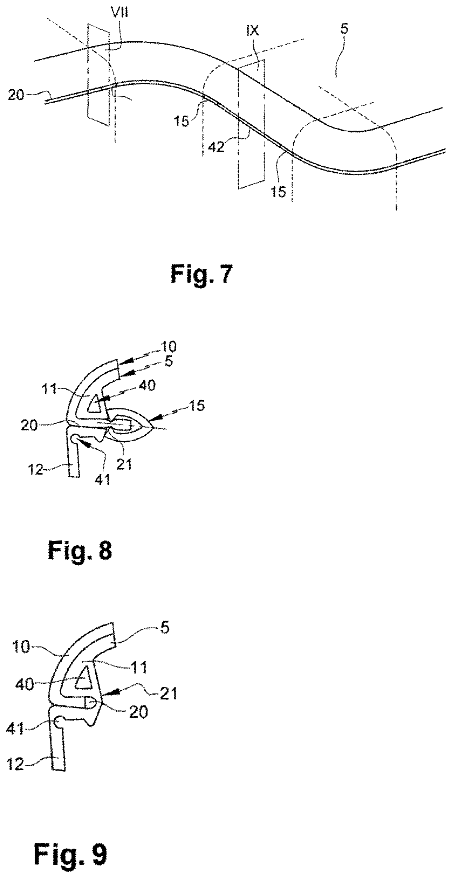

Dans une autre variante, illustrée sur les figures 7 à 9, la largeur de la gorge 20 est plus faible que précédemment et les pinces 15 s'étendent au-delà du fond 21 de la gorge 20.

La coiffe 10 est elle insérée dans la gorge 20 entre les pinces 15 dans des zones 42 de rembordement.

De plus, la matelassure 5 comporte une structure de renfort 40 entre la gorge 20 est la portion rouverte 11, tout le long de la gorge.

Une structure de contre-appui 41 entre la gorge 20 et la portion non recouverte 12 est également prévue, tout le long de la gorge 21. Cette structure de contre-appui 41 peut prendre une première position et une deuxième position et est configurée pour générer une force de rappel élastique vers la première position. Cela permet de faciliter l'insertion de la coiffe 10 dans la gorge 20 et dans la pince 15.

La structure de contre-appui 41 est produit grâce à une réduction de section au niveau de la jonction entre la gorge 20 et la portion non recouverte 12 qui forme une sorte de charnière.

Toujours dans cette variante, la portion recouverte 11 est décalée de la portion non recouverte 12 pour ne pas être dans son prolongement. Le décalage est environ égal à l'épaisseur de la coiffe 10. Ainsi, comme illustré sur les figures 8 et 9, lorsque la coiffe 10 est positionnée sur la matelassure 5, la coiffe 10 est dans le prolongement de la portion non recouverte 12, ce qui offre un bon visuel au siège 1.

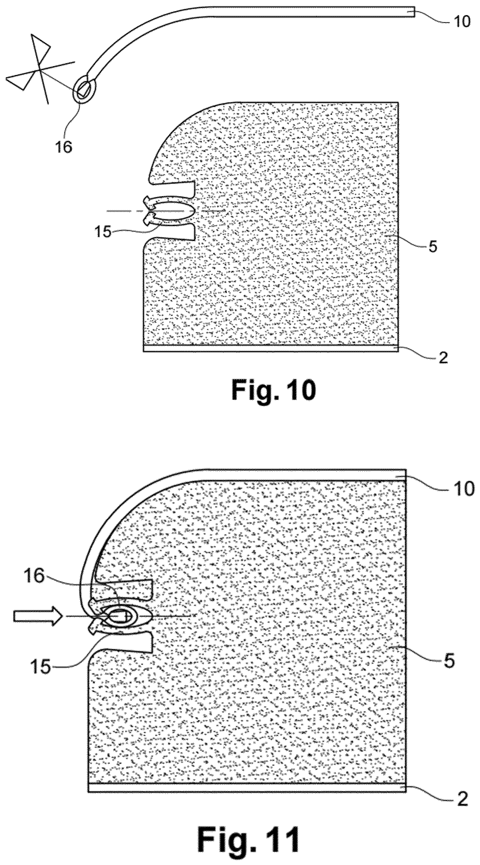

Pour fabriquer l'un des sièges 1 décrits, on peut suivre le procédé décrit ci-après et illustré aux figures 10 et 11.

Dans une première étape, une armature 2 et une coiffe 10 sont fournies.

Dans une deuxième étape, la matelassure 5 et les pinces 15 sont fabriquées ensemble avec un procédé de fabrication additive.

Ensuite, après avoir positionné la matelassure 5 dans l'armature 2, et comme illustré sur les figures 10 et 11, la coiffe 10 est positionnée sur la matelassure 5, puis les joncs 16 sont insérées dans les pinces 15.

## Revendications

1. Siège (1) de véhicule comportant :
- une armature (2) ;
- une matelassure (5) comportant une première surface (6) en contact avec l'armature (2) ;
- une pluralité de premiers organes (15) de fixation solidarisés à la matelassure (5), ladite pluralité de premiers organes (15) de fixation affleurant à une deuxième surface (8) de la matelassure (2) ;
- une coiffe (10) destinée au recouvrement de la matelassure (5), la coiffe (10) comportant à sa périphérie (26) au moins un deuxième organe (16) de fixation configuré pour coopérer avec au moins l'un parmi les premiers organes (15) de fixation pour maintenir la périphérie (26) de la coiffe (10) sur la matelassure (5) ;
dans lequel chaque premier organe (15) de fixation est positionné de sorte que la coiffe (10) recouvre uniquement une première portion (11) de la deuxième surface (8) de la matelassure (5) lorsque lesdits premiers et au moins un deuxième organes (15 ; 16) de fixation coopèrent les uns avec l'autre, le siège étant **caractérisé en ce qu'**une deuxième portion (12) de la deuxième surface (8) de la matelassure (5) non recouverte par la coiffe (10) est visible pour un utilisateur.

2. Siège (1) selon la revendication 1, dans lequel chaque premier organe (15) de fixation est venu de matière avec la matelassure (5).

3. Siège (1) selon la revendication précédente, dans lequel la matelassure (5) et la pluralité de premiers organes (15) de fixation sont fabriqués par un procédé de fabrication additive.

4. Siège (1) selon l'une des revendications 2 et 3, dans lequel la matelassure (5) comporte une structure alvéolaire, la rigidité des premiers organes (15) de fixation étant supérieure à celle de la matelassure (5) au niveau de la structure alvéolaire.

5. Siège (1) selon l'une quelconque des revendications précédentes, dans lequel la deuxième surface (8) comporte un bord s'étendant selon une trajectoire (T), le bord comportant une courbure (35) s'étendant le long de la trajectoire (T) entre un premier point (P1) et un deuxième point (P2), un premier organe (15) de fixation étant positionné le long de la trajectoire (T) avant ou au niveau du premier point (P1), un premier organe (15) de fixation étant positionné le long de la trajectoire (T) après ou au niveau du deuxième point (P2).

6. Siège (1) selon l'une quelconque des revendications précédentes, comprenant au moins trois premiers organes (15) de fixation.

7. Siège (1) selon l'une quelconque des revendications précédentes, dans lequel la matelassure (5) comporte une gorge (20) s'étendant sur la deuxième surface (8), la gorge (20) présentant un fond (21) de gorge, chaque premier organe (15) s'étendant depuis le fond (21) de gorge ou au-delà du fond (21) de gorge.

8. Siège (1) selon la revendication précédente, dans lequel la matelassure (5) comporte une structure de renfort (40) entre la gorge (20) et la première portion (11) de la deuxième surface (8).

9. Siège (1) selon la revendication précédente, dans lequel la matelassure (5) comporte une structure de contre-appui (41) entre la gorge (20) et la deuxième portion (12) de la deuxième surface (5), la structure (41) étant configurée pour prendre une première position et une deuxième position, la structure de contre-appui (41) étant configurée pour générer une force de rappel élastique vers la première position.

10. Procédé de fabrication d'un siège (1) selon l'une quelconque des revendications précédentes, le procédé comportant les étapes suivantes :
- fournir l'armature (2);
- fournir la coiffe (10) ;
- fournir la matelassure (5), la pluralité de premiers organes (15) de fixation étant solidarisés à la matelassure (5) après sa fabrication, chaque premier organe (15) de fixation étant positionné au niveau de la deuxième surface (8) de la matelassure (5) ;
- positionner la matelassure (5) sur l'armature (2) de manière à mettre la première surface (6) de la matelassure (5) en contact avec l'armature (2) ;
- recouvrir la deuxième surface (8) avec la coiffe (10) en faisant coopérer chaque premier organe (15) de fixation avec ledit au moins un deuxième organe (16) de fixation à la périphérie (26) de la coiffe (10) ;
dans lequel, après l'étape de recouvrement, la coiffe (10) recouvre uniquement une première portion (11) de la deuxième surface (8) de la matelassure (5), une deuxième portion (12) de la deuxième surface (8) de la matelassure (5) non recouverte par la coiffe (10) étant visible pour un utilisateur.

## Patentansprüche

1. Sitz (1) eines Fahrzeugs, umfassend:
- einen Beschlag (2);
- eine Polsterung (5), die eine erste Fläche (6) aufweist, die sich in Kontakt mit dem Beschlag (2) befindet;
- mehrere erste Befestigungsorgane (15), die mit der Polsterung (5) fest verbunden sind, wobei die mehreren ersten Befestigungsorgane (15) mit einer zweiten Fläche (8) der Polsterung (2) bündig sind;
- eine Abdeckung (10), die zum Bedecken der Polsterung (5) bestimmt ist, wobei die Abdeckung (10) auf ihrem Umfang (26) mindestens ein zweites Befestigungsorgan (16) aufweist, das dafür ausgelegt ist, mit mindestens einem von den ersten Befestigungsorganen (15) zusammenzuwirken, um den Umfang (26) der Abdeckung (10) auf der Polsterung (5) zu halten;
wobei jedes erste Befestigungsorgan (15) so positioniert ist, dass die Abdeckung (10) lediglich einen ersten Abschnitt (11) der zweiten Fläche (8) der Polsterung (5) bedeckt, wenn die ersten und mindestens ein zweites Befestigungsorgan (15, 16) zusammenwirken, wobei der Sitz **dadurch gekennzeichnet ist, dass** ein zweiter Abschnitt (12) der zweiten Fläche (8) der Polsterung (5), der nicht von der Abdeckung (10) bedeckt ist, für einen Benutzer sichtbar ist.

2. Sitz (1) nach Anspruch 1, wobei jedes erste Befestigungsorgan (15) mit der Polsterung (5) stoffschlüssig verbunden ist.

3. Sitz (1) nach dem vorhergehenden Anspruch, wobei die Polsterung (5) und die mehreren ersten Befestigungsorgane (15) mit einem additiven Fertigungsverfahren hergestellt sind.

4. Sitz (1) nach einem der Ansprüche 2 und 3, wobei die Polsterung (5) eine Wabenstruktur aufweist, wobei die Steifigkeit der ersten Befestigungsorgane (15) größer als diejenige der Polsterung (5) im Bereich der Wabenstruktur ist.

5. Sitz (1) nach einem der vorhergehenden Ansprüche, wobei die zweite Fläche (8) einen Rand aufweist, der sich entlang einer Trajektorie (T) erstreckt, wobei der Rand eine Krümmung (35) aufweist, die sich entlang der Trajektorie (T) zwischen einem ersten Punkt (P1) und einem zweiten Punkt (P2) erstreckt, wobei ein erstes Befestigungsorgan (15) entlang der Trajektorie (T) vor oder an dem ersten Punkt (P1) positioniert ist und ein erstes Befestigungsorgan (15) entlang der Trajektorie (T) nach oder an dem zweiten Punkt (P2) positioniert ist.

6. Sitz (1) nach einem der vorhergehenden Ansprüche, welcher mindestens drei erste Befestigungsorgane (15) umfasst.

7. Sitz (1) nach einem der vorhergehenden Ansprüche, wobei die Polsterung (5) eine Nut (20) aufweist, die sich auf der zweiten Fläche (8) erstreckt, wobei die Nut (20) einen Nutboden (21) aufweist, wobei sich jedes erste Organ (15) vom Nutboden (21) aus oder über den Nutboden (21) hinaus erstreckt.

8. Sitz (1) nach dem vorhergehenden Anspruch, wobei die Polsterung (5) eine Verstärkungsstruktur (40) zwischen der Nut (20) und dem ersten Abschnitt (11) der zweiten Fläche (8) aufweist.

9. Sitz (1) nach dem vorhergehenden Anspruch, wobei die Polsterung (5) eine Gegenlagerstruktur (41) zwischen der Nut (20) und dem zweiten Abschnitt (12) der zweiten Fläche (5) aufweist, wobei die Struktur (41) dafür ausgelegt ist, eine erste Position und eine zweite Position einzunehmen, wobei die Gegenlagerstruktur (41) dafür ausgelegt ist, eine elastische Rückstellkraft in Richtung der ersten Position zu erzeugen.

10. Verfahren zur Herstellung eines Sitzes (1) nach einem der vorhergehenden Ansprüche, wobei das Verfahren die folgenden Schritte umfasst:
- Bereitstellen des Beschlages (2);
- Bereitstellen der Abdeckung (10);
- Bereitstellen der Polsterung (5), wobei die mehreren ersten Befestigungsorgane (15) mit der Polsterung (5) nach deren Herstellung fest verbunden werden, wobei jedes erste Befestigungsorgan (15) an der zweiten Fläche (8) der Polsterung (5) positioniert wird;
- Positionieren der Polsterung (5) auf dem Beschlag (2) derart, dass die erste Fläche (6) der Polsterung (5) mit dem Beschlag (2) in Kontakt gebracht wird;
- Bedecken der zweiten Fläche (8) mit der Abdeckung (10), wobei jedes erste Befestigungsorgan (15) mit dem mindestens einen zweiten Befestigungsorgan (16) am Umfang (26) der Abdeckung (10) zusammenwirken gelassen wird;
wobei nach dem Schritt des Bedeckens die Abdeckung (10) lediglich einen ersten Abschnitt (11) der zweiten Fläche (8) der Polsterung (5) bedeckt, während ein zweiter Abschnitt (12) der zweiten Fläche (8) der Polsterung (5), der nicht von der Abdeckung (10) bedeckt ist, für einen Benutzer sichtbar ist.

## Claims

1. Vehicle seat (1) having:
- a frame (2);
- padding (5) having a first surface (6) in contact with the frame (2);
- a plurality of first fastening members (15) secured to the padding (5), said plurality of first fastening members (15) being flush with a second surface (8) of the padding (2);
- a cover (10) intended to cover the padding (5), the cover (10) having at its periphery (26) at least one second fastening member (16) configured to cooperate with at least one of the first fastening members (15) to hold the periphery (26) of the cover (10) on the padding (5); wherein each first fastening member (15) is positioned such that the cover (10) covers only a first portion (11) of the second surface (8) of the padding (5) when said first and at least one second fastening members (15; 16) cooperate with one another, the seat being **characterized in that** a second portion (12) of the second surface (8) of the padding (5), which is not covered by the cover (10), is visible to a user.

2. Seat (1) according to Claim 1, wherein each first fastening member (15) is integral with the padding (5).

3. Seat (1) according to the preceding claim, wherein the padding (5) and the plurality of first fastening members (15) are manufactured using an additive manufacturing process.

4. Seat (1) according to either of Claims 2 and 3, wherein the padding (5) has a cellular structure, the stiffness of the first fastening members (15) being greater than that of the padding (5) at the cellular structure.

5. Seat (1) according to any one of the preceding claims, wherein the second surface (8) has an edge extending along a path (T), the edge having a curvature (35) extending along the path (T) between a first point (P1) and a second point (P2), one first fastening member (15) being positioned along the path (T) before or at the first point (P1), and one first fastening member (15) being positioned along the path (T) after or at the second point (P2).

6. Seat (1) according to any one of the preceding claims, comprising at least three first fastening members (15).

7. Seat (1) according to any one of the preceding claims, wherein the padding (5) has a groove (20) extending over the second surface (8), the groove (20) having a groove bottom (21), each first member (15) extending from the groove bottom (21) or beyond the groove bottom (21).

8. Seat (1) according to the preceding claim, wherein the padding (5) has a reinforcing structure (40) between the groove (20) and the first portion (11) of the second surface (8).

9. Seat (1) according to the preceding claim, wherein the padding (5) has a counter-bearing structure (41) between the groove (20) and the second portion (12) of the second surface (5), the structure (41) being configured to assume a first position and a second position, the counter-bearing structure (41) being configured to generate a force for elastic return towards the first position.

10. Method for manufacturing a seat (1) according to any one of the preceding claims, the method involving the following steps:
- providing the frame (2);
- providing the cover (10);
- providing the padding (5), the plurality of first fastening members (15) being secured to the padding (5) after the manufacture thereof, each first fastening member (15) being positioned at the second surface (8) of the padding (5);
- positioning the padding (5) on the frame (2) so as to place the first surface (6) of the padding (5) in contact with the frame (2);
- covering the second surface (8) with the cover (10) by making each first fastening member (15) cooperate with said at least one second fastening member (16) at the periphery (26) of the cover (10);
wherein, after the covering step, the cover (10) covers only a first portion (11) of the second surface (8) of the padding (5), a second portion (12) of the second surface (8) of the padding (5), which is not covered by the cover (10), being visible to a user.
